## Europäisches Patentamt
## European Patent Office
## Office européen des brevets

(11) Veröffentlichungsnummer : **0 030 584**
**B1**

(12)

# EUROPÄISCHE PATENTSCHRIFT

(45) Veröffentlichungstag der Patentschrift :
22.06.83

(51) Int. Cl.³ : **H 04 L 27/22, H 03 K 9/00**

(21) Anmeldenummer : 80102768.1

(22) Anmeldetag : 20.05.80

(54) **Verfahren und Anordnung zur digitalen Regelung der Trägerphase in Empfängern von Datenübertragungssystemen.**

(30) Priorität : **14.12.79 DE 2950339**

(43) Veröffentlichungstag der Anmeldung :
**24.06.81 Patentblatt 81/25**

(45) Bekanntmachung des Hinweises auf die Patenterteilung : **22.06.83 Patentblatt 83/25**

(84) Benannte Vertragsstaaten :
**FR GB NL SE**

(56) Entgegenhaltungen :
**DE A 2 729 312**
**DE B 2 627 446**
**GB A 1 535 445**
**« FREQUENZ » Band 33, Nr. 5 u. 6, Mai und Juni 1979   Berlin   KARL-DIRK   KAMMEYER U. HEINRICH SCHENK, « Ein flexivies Experimentiersystem für die Datenübertragung im Fernsprechbereich » S. 141-145 u. 165-172**

(73) Patentinhaber : **AEG - TELEFUNKEN Nachrichtentechnik GmbH**
**Gerberstrasse 33**
**D-7150 Backnang (DE)**

(72) Erfinder : **Göckler, Heinz, Dipl.-Ing.**
**Eibinger-Strasse 52**
**D-7150 Backnang (DE)**
Erfinder : **Hofmeister, Hagen, Ing.-grad.**
**Neustädter-Strasse 34**
**D-7054 Korb (DE)**

(74) Vertreter : **Schickle, Gerhard, et al**
**AEG-TELEFUNKEN Nachrichtentechnik GmbH K1 E7**
**Gerberstrasse 33**
**D-7150 Backnang (DE)**

## Verfahren und Anordnung zur digitalen Regelung der Trägerphase in Empfängern von Datenübertragungssystemen

Die Erfindung betrifft ein Verfahren bzw. eine Schaltungsanordnung zur digitalen Regelung der Trägerphase in Empfängern von Datenübertragungssystemen, wobei mit einem Vergleicher aus dem Abtastwert des demodulierten Eingangssignals und dem mittels Entscheider diesem zugeordneten Schätzwert für jeden Abtastzeitpunkt die Regelabweichung dk, die ein Maß für die Phasendifferenz zwischen Abtast- und Schätzwert ist, bestimmt und in einem digitalen Schleifenfilter, das einen Proportional- und einen Integrationszweig aufweist, gefiltert wird und wobei einem sich anschliessenden Akkumulator die Regelgröße entnehmbar ist.

Ein Verfahren zur digitalen Regelung der Trägerphase in Empfängern von Datenübertragungssystemen ist bekannt geworden durch den Aufsatz « Ein flexibles Experimentiersystem für die Datenübertragung im Fernsprechbereich » von Kammeyer und Schenk, Frequenz, Bd. 33, N° 5 und N° 6, S. 141 bis 145 und S. 165 bis 172, sowie durch « Datenübertragung mit 4,8 kBit/s im Fernsprechnetz » von Göckler, Hofmeister und Till, Wissenschaftliche Berichte AEG-TELEFUNKEN 51, 1978, 4/5, S. 231 bis 245. Hierbei wird die Phaseninformation für die Trägerregelung aus dem Eingangs- und Ausgangssignal des Entscheiders abgeleitet. Das Entscheider-Eingangssignal läßt sich in der Signalebene durch einen Zeiger darstellen, der bei Quadratur amplitudenmodulation (QAM) die Komponenten $\tilde{x}_k$ und $\tilde{y}_k$ aufweist, wobei diese Komponenten Abtastwerte des analytischen Signals nach der Demodulation sind. Im Entscheider werden diesen Abtastwerten die Schätzwerte $\hat{a}_k$, $\hat{b}_k$ zugeordnet. Der Mittelwert der Phasendifferenz $\Delta\varphi$ zwischen dem Istwert- und dem Sollwertzeiger entspricht dem Trägerphasenfehler. Durch die Trägerregelung wird die Demodulationsphase so lange nachgeregelt, bis die Phasendifferenz im Mittel zu Null wird. Dazu wird in einem Vergleicher für jeden Abtastzeitpunkt k · T die Regelabweichung dk bestimmt, die sich durch entsprechende Verknüpfung der Eingangs- und Ausgangssignale des Entscheiders ergibt. Nach der Filterung der Regelabweichung in einem digitalen Schleifenfilter mit anschließender Akkumulation ergibt sich der für die kohärente Demodulation erforderliche zusätzliche Drehwinkel des Signalzeigers. Das digitale Schleifenfilter enthält einen Proportional- und einen Integralzweig. Beide Zweige des Filters sind mittels Multiplikatoren ki bzw. kv gewichtbar. Auch bei günstiger Dimensionierung dieser beiden Gewichtungsfaktoren ist es jedoch möglich, daß im eingeschwungenen Endzustand andere vom Gütekriterium her gleichartige, ansonsten aber unbrauchbare Parametereinstellungen auftreten.

Der Erfindung liegt daher die Aufgabe zugrunde, ein Verfahren bzw. eine Schaltungsanordnung zur Durchführung dieses Verfahrens anzugeben, die es gestatten, daß beim gemeinsamen verkoppelten Einlaufen der Signale vom adaptiven Entzerrer und der digitalen Phasenregelung im eingeschwungenen Endzustand die optimale Einstellung der Parameter so erfolgt, daß eine korrekte Datenübertragung möglich ist. Dabei soll vermieden werden, daß andere, bezüglich des Gütekriteriums gleichartige, ansonsten aber unbrauchbare Parametereinstellungen auftreten.

Die Aufgabe wird gelöst, wie in den Ansprüchen beschrieben.

Es folgt nun eine Beschreibung der Erfindung anhand der Figuren und eines Ausführungsbeispiels eines m PSK (Phase shift keying)-Modems mit m = 8.

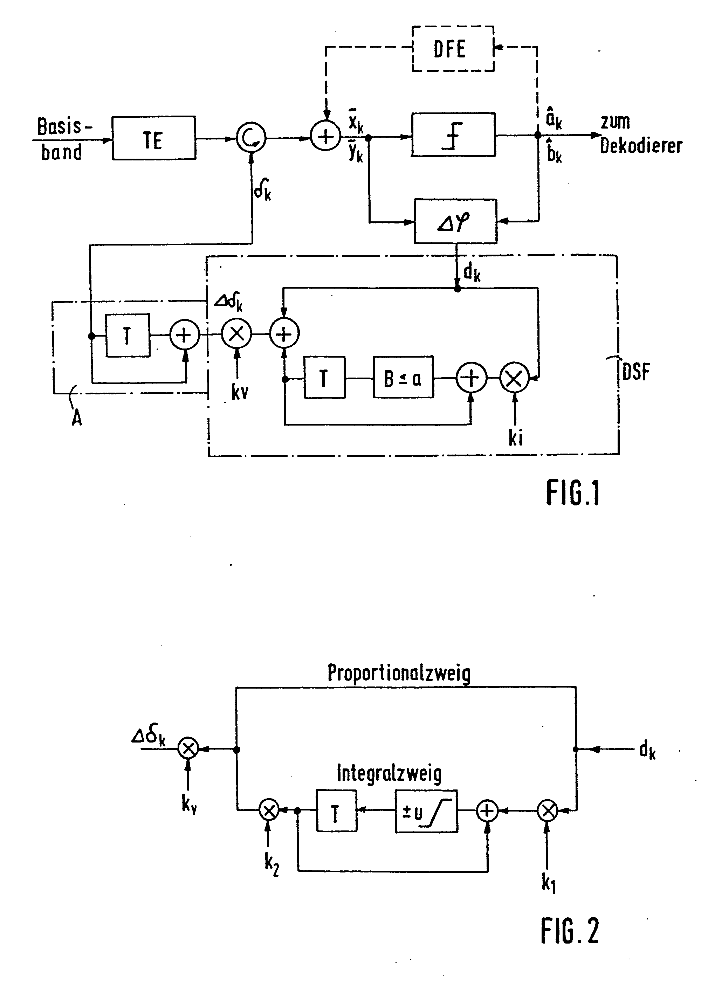

Die Fig. 1 zeigt ein Beispiel für den Aufbau einer Trägerregelungsschaltung, wobei das demodulierte und in einem Transversalentzerrer TE entzerrte Basisbandsignal mit Hilfe der Regelgröße δk auf die Sollage gedreht wird, beispielsweise unter Zuhilfenahme eines Cordic « (Coordinate rotation digital computer) »-Algorithmus, wobei anschließend in einem Entscheider dem Signalwert ein Schätzwert zugeordnet wird (bei Quadraturamplitudenmodulation (QAM) besteht das Signal aus den Komponenten $\tilde{x}_k$ bzw. $\tilde{y}_k$, denen die Schätzwerte $\hat{a}_k$ bzw. $\hat{b}_k$ zugeordnet werden) und wobei in einem Vergleicher die Phasendifferenz $\Delta\varphi$ zwischen Schätzwert und Abtastwert festgestellt wird, die als Regelabweichung dk in einem digitalen Schleifenfilter DSF gefiltert und in einem sich anschließenden Akkumulator A zur Regelgröße δk akkumuliert wird. Das digitale Schleifenfilter DSF enthält einen Integralzweig, der aus einem rückgekoppelten Verzögerungsglied T ebenso wie der Akkumulator A besteht. Proportional- und Integralzweig des digitalen Schleifenfilters sind mit den Multiplikatoren kv bzw. ki gewichtbar. Erfindungsgemäß enthält der Integralzweig einen Begrenzer B, durch den die Änderung der Regelgröße δk auf einen maximalen Betrag pro Schritttakt begrenzt wird, wodurch unbrauchbare Parametereinstellungen vermieden werden.

Die Erfindung kann selbstverständlich auch angewandt werden bei Empfängern mit entscheidungsrückgekoppelten Entzerrern DFE (Decision feedback equalizer) oder mit beliebigen anderen Entzerrerprinzipien.

Am Beispiel eines m PSK-Modems mit m = 8 sei im folgenden die Erfindung näher beschrieben :

Die m = 8 Sollphasenpunkte in der Phasenebene sind äquidistant angeordnet, der Winkelabstand beträgt 360°/8 = 45°. Der Entscheider in Fig. 1 gibt von Schritt zu Schritt je einen dieser Phasenpunkte aus, worauf die zukünftige Einstellung der Phasenregelung und des adaptiven Entzerrers aufbaut. Durch besondere Umstände (Anfangsbedingungen, Störungen) kann es vorkommen, daß im Integralzweig einzelne Größen derart aufsummiert wurden, daß die Phasenregelung von Schritt zu Schritt jeweils um i · 360°/m =

i · 45°, wobei i eine natürliche Zahl ist, die Phase dreht, ohne daß diese Phasendrehung einer tatsächlich vorhandenen Frequenzverwerfung zwischen Modemsender und Empfänger entspricht. Dies führt zu Fehlentscheidungen, die im System im allgemeinen erst bei Prüfung der empfangenen Datenfolge erkennbar sind.

Der beschriebene unerwünschte Zustand wird dann nicht erreicht, wenn man die Ausgangsgröße des Integralzweiges derart begrenzt, daß pro Schritt die Phase um maximal 22,5° = 360°/2m gedreht werden kann.

Man kann die Begrenzung auch mit Hilfe einer Überlaufabfrage gemäß Fig. 2 realisieren. Wenig aufwendig wird die Überlaufabfrage, wenn man den Gewichtsfaktor ki in das Produkt zweier Teilfaktoren aufteilt. Besonders einfach wird die Realisierung, wenn der Gewichtsfaktor ki oder wenigstens einer der beiden Teilfaktoren k1 oder k2 von der Form $2^{-i}$ (i = ganze Zahl) ist.

Um beim Beginn einer Übertragung ein schnelles und störungsfreies Einschwingen des Systems zu ermöglichen, ist nach CCITT das Senden einer bestimmten Datenübertragungs-Präambel vorgeschrieben.

Wenn man nun den Fangbereich schon während der Übertragung der Präambel einengt, könnten Probleme auftreten und der Einschwingvorgang verzögert werden. Es ist daher von Vorteil, wenn gemäß Anspruch 2, die Begrenzung (B) erst nach Ende der Datenübertragungs-Präambel erfolgt.

## Ansprüche

1. Verfahren zur digitalen Regelung der Trägerphase in Empfängern von Datenübertragungssystemen, wobei mit einem Vergleicher aus dem Abtastwert des demodulierten Eingangssignals und dem mittels Entscheider diesem zugeordneten Schätzwert für jeden Abtastzeitpunkt die Regelabweichung dk, die ein Maß für die Phasendifferenz zwischen Abtast- und Schätzwert ist, bestimmt und in einem digitalen Schleifenfilter (DSF), das einen Proportional- und einen Integralzweig aufweist, gefiltert wird und wobei einem sich anschließenden Akkumulator (A) die Regelgröße entnehmbar ist, dadurch gekennzeichnet, daß im Integralzweig des digitalen Schleifenfilters (DSF) eine nichtlineare Begrenzung (B) eingefügt wird, durch die alle Regelabweichungen |dk| > a auf den Regelabweichungswert |dk| ≤ a begrenzt werden, wobei a = 360°/2m und m die Anzahl der Sollphasenlagen ist.

2. Verfahren nach Anspruch 1, dadurch gekennzeichnet, daß die Einfügung der nichtlinearen Begrenzung (B) erst nach Ende einer Datenübertragungs-Präambel erfolgt.

3. Schaltungsanordnung zur Durchführung des Verfahrens nach einem der vorhergehenden Ansprüche, bestehend aus Regelkreis mit Vergleicher, digitalem Schleifenfilter (DSF) und Akkumulator (A), wobei das digitale Schleifenfilter einen Integralzweig mit rückgekoppeltem und mittels Multiplikation mit ki gewichtbares Verzögerungsglied (T), einen Proportionalzweig, ein die beiden Zweige zusammenführendes Summierglied und ein weiteres Multiplikationsglied aufweist, mittels dessen beide Zweige mit kv gewichtbar sind, dadurch gekennzeichnet, daß im Integralzweig eine nichtlineare Begrenzung (B) eingefügt ist, durch die alle Regelabweichungen |dk| > a auf den Regelabweichungswert |dk| ≤ a begrenzt werden, wobei a = 360°/2m und m die Anzahl der Sollphasenlagen ist.

## Claims

1. Method for the digital regulation of the carrier phase in receivers of data transmission systems, in which the deviation dk is determined for each scanning instant by a comparator from the scanned value of the demodulated input signal and the estimated value associated by means of decider therewith, is a measure of the phase difference between the scanned and the estimated value and is filtered in a digital loop filter (DSF), which displays a proportional and an integrating branch, and in which the regulating magnitude is extractable from an adjoining accumulator (A), characterised thereby, that a non-linear limitation (B), through which all deviations |dk| > a are limited to the deviation value |dk| ≤ a, wherein a = 360°/2m and m is the number of the intended phase positions, is inserted in the integrating branch of the digital loop filter (DSF).

2. Method according to claim 1, characterised thereby, that the insertion of the non-linear limitation (B) takes place only after the end of a data transmission preamble.

3. Circuit arrangement, for the performance of the method according to one of the preceding claims, consisting of regulating circuit with comparator, digital loop filter (DSF) and accumulator (A), wherein the digital loop filter displays a delay member (T), which is subject to feedback and weightable by ki by means of multiplication, a proportional branch, a summation member combining both the branches, and a further multiplication member, by means of which both branches are weightable by kv, characterised thereby, that a non-linear limitation (B), through which all deviations |dk| > a are limited to the deviation value |dk| ≤ a, wherein a = 360°/2m and m is the number of the intended phase positions, is inserted in the integrating branch.

## Revendications

1. Procédé numérique pour la régulation de phase de la porteuse ou du porteur dans les récepteurs de systèmes de transmission de données, selon lequel on détermine par un comparateur l'erreur de réglage dk pour chaque instant d'échantillonnage à partir de la valeur échantillonnée du signal d'entrée démodulé et de la valeur estimée qui lui est attribuée au moyen d'un élément de décision ou à seuil, on filtre l'erreur de réglage — qui est une mesure de la différence de phase entre la valeur échantillonnée et la valeur estimée — dans un filtre en boucle numérique (DSF) possédant une branche proportionnelle et une branche intégrale et on peut prélever la grandeur réglante ($\delta$k) d'un accumulateur (A) prévu à la suite, caractérisé en ce que l'on introduit dans la branche intégrale du filtre en boucle numérique (DSF) une limitation non linéaire (B), par laquelle toutes les erreurs de réglage |dk| > a sont limitées à la valeur d'erreur de réglage |dk| ⩽ a, où a = 360°/2m et m est le nombre des positions de phase prescrites.

2. Procédé selon la revendication 1, caractérisé en ce que l'on introduit la limitation non linéaire (B) seulement après la fin d'un préambule à la transmission de données.

3. Montage pour la mise en œuvre du procédé selon l'une des revendications précédentes, comprenant un circuit de régulation avec un comparateur, un filtre en boucle numérique (BSF) et un accumulateur (A), le filtre présentant une branche intégrale contenant un élément temporisateur (T) à réaction et pondérable par multiplication par ki, une branche proportionnelle, un élément totalisateur réunissant les deux branches et un élément multiplicateur supplémentaire, au moyen duquel les deux branches sont pondérables par (kv), caractérisé en ce qu'une limitation non linéaire (B) est introduite dans la branche intégrale, limitation par laquelle toutes les erreurs de réglage |dk| > a sont limitées à la valeur d'erreur de réglage |dk| ⩽ a, où a = 360°/2m et m est le nombre des positions de phase prescrites.

FIG.1

FIG.2

1